Europäisches Patentamt

(19) European Patent Office

Office européen des brevets

(11) Publication number: **0 236 527 B1**

# EUROPEAN PATENT SPECIFICATION

(45) Date of publication of patent specification: **24.07.91**  (51) Int. Cl.⁵: **G03B 17/48**, G02B 23/08

(21) Application number: **86103326.4**

(22) Date of filing: **12.03.86**

(54) **Rotable snorkel system.**

(43) Date of publication of application:
**16.09.87 Bulletin 87/38**

(45) Publication of the grant of the patent:
**24.07.91 Bulletin 91/30**

(84) Designated Contracting States:
**DE FR GB IT**

(56) References cited:
**GB-A- 2 090 989**
**US-A- 4 195 922**
**US-A- 4 235 541**
**US-A- 4 375 913**

(73) Proprietor: **Hajnal, Stephen**
**5600 Riverdale Avenue**
**Bronx New York 10471(US)**

(72) Inventor: **Hajnal, Stephen**
**5600 Riverdale Avenue**
**Bronx New York 10471(US)**

(74) Representative: **Graf, Helmut, Dipl.-Ing. et al**
**Patentanwälte Dipl.-Ing. A. Wasmeier**
**Dipl.-Ing. H. Graf Greflinger Strasse 7 Postfach 382**
**W-8400 Regensburg(DE)**

## Description

The present invention relates to a snorkel camera system.

The present invention is an improvement in the snorkel camera system of U.S. Patent 4,375,913, issued March 8, 1983. In that patent, the snorkel camera system had two lenses of specified design to permit the use of a super 8mm format camera lens as the prime lens in combination with a 35mm format or videotape camera body. The present system uses a different optical and mechanical system than my previous snorkel camera system to permit pictures to be taken with the optical axis of the prime lens parallel to the optical axis of the eyepiece of the camera. The present invention enables the user to swing the prime lens to any one of several positions while maintaining the correct attitude of the image seen in the view finder of the camera. All of this is accomplished with the ability to use interchangeable lenses and even zoom lenses.

The present invention is illustrated in terms of a preferred embodiment in the accompanying drawing, in which:

Fig. 1 is a diagrammatic view, partly in section, of the camera snorkel system of the invention; and

Fig. 2 is a view, in section, along lines 2-2 of Fig. 1.

The drawing shows the snorkel camera system of the invention, comprising a camera body 1, having an eyepiece 2 and a lens mount 3, connected to a mounting ring 4, of a snorkel assembly 5. Camera body 1 has the usual electronics or film or videotape advancing mechanism (not shown) and is a fully operational television, videotape, motion picture or still camera minus the camera lens itself. Mounting ring 4 is fixedly secured to the lens mount 3 in a conventional manner, such as by screw-in or bayonet mounting.

The snorkel assembly 5 includes a tubular housing 6 having a lens mount 7 at the end remote from camera body 1. Lens 8, such as a zoom lens or other lens of desired optical characteristics, is mounted to lens mount 7 in a conventional manner. Adjacent lens mount 7 is a 90° prism 9, and compound lenses 20 and 30 are located between prism 9 and mounting ring 4. Compound lenses 20 and 30 are shown diagrammatically with only the front and rear elements drawn in solid line. Penta-prism 10 is located immediately following compound lens 30 to complete the optional elements of the snorkel assembly 5.

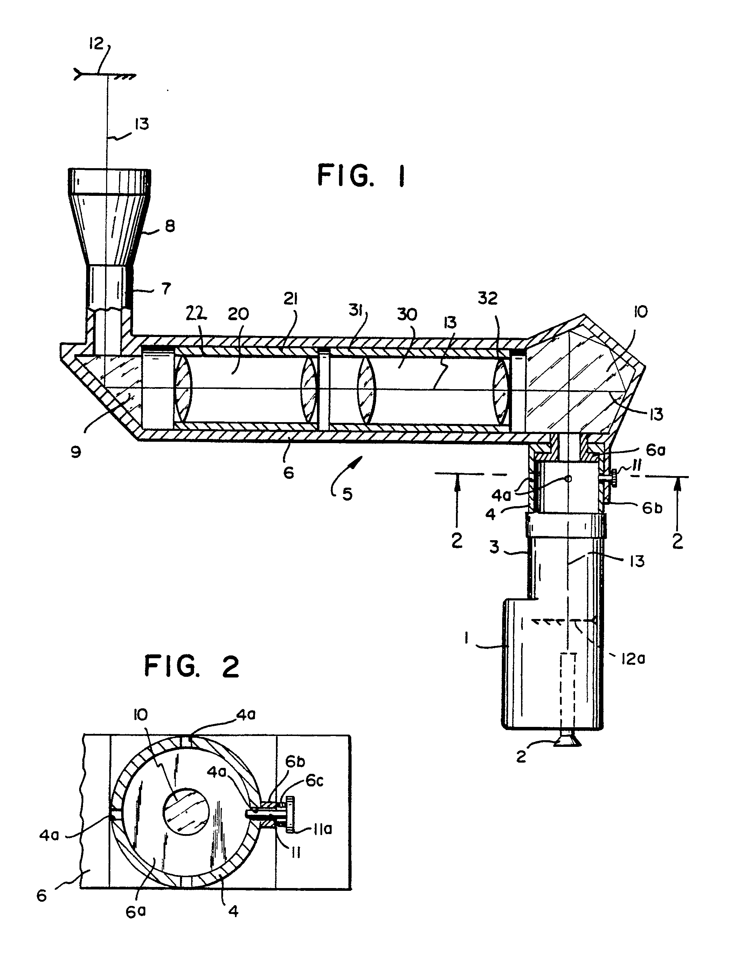

Mounting ring 4 is carried by support member 6a, which is fixedly secured to housing 6, as by screw threads or the like. Pin 11 passes through an arm 6b extending from housing 6 and hence through one of the apertures 4a in mounting ring 4. Spring 6c (Fig. 2) is secured to the head 11a of pin 11 and to the arm 6b and urges the head 11a into engagement with the arm 6b. Apertures 4a are spaced around the axis of ring 4, and four apertures 4a are shown, spaced 90° apart. Usually this will be sufficient, but more or less apertures may be used. When pin 11 is pulled out of aperture 4a, the snorkel assembly 5 is free to rotate relative to the mounting ring 4 about the axis of mounting ring 4. Since ring 4 is fixedly secured to the camera body 1, the snorkel assembly 5 may thus be rotated relative to the camera body 1, as well. Insertion of pin 11 into aperture 4a locks the snorkel assembly 5 in place.

The operation of the snorkel system of the invention is as follows. The object 12 to be photographed is viewed through the lens of eyepiece 2 and the optical path 13 of the snorkel system is through lens 8, 90° prism 9, lenses 20 and 30, penta-prism 10 to the eyepiece 2 of camera body 1. Camera body 1 is provided with conventional beam splitter means (not shown) to transmit the image of object 12 onto a film (not shown) and a viewing screen (not shown), as is common for single lens reflex cameras. The image transmitted to the film plane is image 12a, i.e. an upside down and reversed image. Eyepiece 2 transmits the image 12a seen on the viewing screen to the eye, and the eye "sees" an image identical to object 12, not its mirror image. Since snorkel systems are often used in tight quarters, it is necessary to avoid viewing mirror images through eye-piece 2, since this would be confusing.

It is an important feature of the invention that the camera man can use the camera 1 with the snorkel system 5 attached thereto without any change in viewing attitude. That is, the lens 8 and the eyepiece 2 are parallel, and the camera 2 will "see" whatever is directly in front of it. This is to be contrasted with prior art snorkel systems, where the axis of the prime lens is perpendicular to the axis of the camera. A camera man using a 90° snorkel of the prior art will have to learn new shooting techniques, whereas the snorkel of the present invention can be used immediately, with no old habits to break.

Another important feature of the invention, is that the lens 8 can be rotated to any one of the positions provided by apertures 4a with respect to the camera 1 without any change in the attitude of the image 12a viewed through eyepiece 2; a tree will always be seen with leaves above the ground through a full 360° revolution of the lens 8 around the camera body 1. This means that the camera man can hide behind an object and swing the lens 8 to the left, the right, above or below and still see an image disposed in the "correct" attitude.

Another important advantage of the present invention is the ability to interchange prime lenses. With the prisms 9 and 10 being internal of the system, the need for an external mirror to erect the image seen in the viewfinder is eliminated. In consequence thereof, the camera lens 8 may be easily replaced by another lens simply by detaching it from lens mount 7. Either screw-in or bayonet mounting may be employed for lens mount 7, as desired.

Camera body 1 may be a still or motion picture film camera, a television camera or a videotape camera. The snorkel system 5 is readily attached to the lens mount 3 of a television or videotape camera 1, which is then employed in the normal manner. Alternatively, a television or videotape camera (not shown) can be attached directly to the eyepiece of a 35mm body. It will be appreciated that lenses 20, 30 will be located in the housing 6 in the proper focus position depending upon whether camera body 1 is a 35mm format camera or a television or videotape camera.

Camera body 1 will generally be a 35mm format still or motion picture camera or a television or videotape camera having about the same size format. Preferably, lens 8 will be a 16mm format lens, such as a 16mm format zoom lens, although an 8mm format lens or a 35mm format lens can be used as lens 8. When an 8mm format or 16mm format lens is used as lens 8, the lens system 8, 20, 30 provides the 35mm format or videotape camera body 1 with a high resolution image that is characteristic of the smaller format lens 8, but with the image enlarged to the 35mm (or 3/4 inch or 1 inch videotape) format size. This is accomplished at a depth or field that is far beyond that which could have been predicted. Thus, when lens 8 is a super 8mm format, 6mm to 80mm zoom lens, f4 and f22, a depth of field of one inch (25.4mm) to infinity is obtained using a 35mm format camera body mount. While some light is lost through prism 9 and lenses 20 and 30 of about two stops, this loss is insignificant as compared to the increase in resolution and the phenomenal increase in depth of field.

If lens 8 is of the same format as the camera body 1, then lenses 20 and 30 will comprise a simple relay lens system. If lens 8 is of smaller format than the camera body 1, as described above, then lenses 20 and 30 are chosen to enlarge the image obtained from the 8mm format lens 8 to accommodate the larger image size of the larger format camera body 1, while meeting the requirement that the image seen by the eye through eyepiece 2 is erect and non-reversed. For an 8mm format lens 8, lens 20 will be a 58mm focal length, 35mm format lens with the front end 21 facing prism 10 and the rear end 22 facing prism 9, and lens 30 will be a 200mm focal length, 35mm format lens with the front end 31 facing prims 9 and the rear end 32 facing prism 10. When lens 8 is a 16mm format lens, then lens 20 will be a 100mm focal length, 35 mm format lens and lens 30 will be a 150mm focal length, 35mm format lens with the front 21, 31 of each lens facing each other as described above.

Lenses 20, 30 can be disposed in a light path with either end being upstream, but one of the two positions will provide a greater magnification, $m = p/q$ where m is the magnification and p and q are the object and image distances, respectively. As used herein, the "front" and "rear" of lenses 20, 30 refers to the upstream and downstream ends, respectively, when the lens 20, 30 is in the position that provides the greater magnification. Thus, in Fig. 1, lens 30 is disposed in the light path in its "normal" position to provide a greater magnification, while lens 20 is "reversed" and will provide a lesser magnification than if disposed in its normal position.

## Claims

1. A snorkel camera system comprising a camera body means (1) having a light admitting opening therein, means for recording images transmitted through said light admitting opening, and an eyepiece (2) having a lens therein for viewing the object (12) being photographed; an elongated hollow housing means (6) having one end arranged for light entry and the other end for light egress, the light-egress end of said housing means (6) being detachably secured to said camera body means (1) at said light admitting opening; a prime lens (8) detachably secured to the light entry end of said housing means and optical means (9, 20, 30, 10) for providing an optical path from said prime lens through said housing means (6) to and through the light admitting opening of said camera body means, said optical means comprising a 90° prism means (9) in said housing means adjacent said light entry end turning said optical path through an angle of 90°, characterized by a penta prism means (10) adjacent said light egress end and having a first face disposed toward said 90° prism means (9) and a second face perpendicular to said first face and disposed toward said light admitting opening of said camera body means, said penta prism means (10) being operable to turn said optical path through an angle of 90°, whereby the optical axis of the eyepiece (2) becomes parallel to the axis of the prime lens (8) and an erect non-reversed image of the object is viewed through said eyepiece; and connector means (6b, 4, 11) carried by said housing means (6) at said light egress end and for enabling said housing means (6) to be selectively rotated about the axis of camera body means (1).

2. Camera system according to claim 1, wherein said connector means comprises tubular means (4) having one end mounted to said housing means (6) for rotation about the axis of the tubular means (4) and the other end detachably secured to said camera body means (1), said optical path passing from said penta prism means (10) to said camera body means (1) through said tubular means.

3. Camera system according to claim 1 or 2, wherein locking means (11) is provided to selectively lock said rotatable connector means in a desired position.

4. Camera system according to claim 1, wherein said camera body means is a 35 mm formal motion picture camera body.

5. Camera system according to claim 1, wherein said camera body means is a television camera or a videotape camera body.

6. Camera system acccording to claim 4 or 5, wherein said prime lens (8) is an 8 mm or 16 mm format lens and said optical means comprises lens means (20, 30) between said prism means (9, 10) for enlarging the image transmitted by said prime lens (8).

## Revendications

1. Dispositif de schnorkel pour appareil de prises de vues comportant un corps d'appareil (1) possédant une ouverture d'admission de lumière, des moyens pour enregistrer des images transmises à travers ladite ouverture d'admission de lumière, et un oculaire (2) possédant une lentille pour viser l'objet (12) photographié; un boitier creux allongé (6) ayant une extrémité disposée pour l'entrée de la lumière et une autre extrémité pour sa sortie, l'extrémité de sortie de la lumière dudit boîtier (6) étant fixée de manière détachable audit corps d'appareil (1) au niveau de l'ouverture d'admission de lumière, une lentille primaire (8) fixée de manière détachable à l'extrémité d'entrée de lumière dudit boîtier et des moyens optiques (9,20,30,10) pour fournir un trajet optique allant de ladite lentille primaire à travers ledit boîtier (6) jusqu'à et à travers l'ouverture d'admission de lumière dudit corps d'appareil, lesdits moyens optiques comprenant un prisme (9) à 90° dans ledit boîtier adjacent à ladite extrémité d'entrée de lumière et faisant tourner le trajet optique d'un angle de 90°,

caractérisé par un prisme pentagonal (10) adjacent à ladite sortie de lumière et ayant une première face tournée vers ledit prisme à 90° et une seconde face perpendiculaire à ladite première face et tournée vers ladite ouverture d'admission de lumière dudit corps d'appareil, ledit prisme pentagonal (10) fonctionnant pour faire tourner ledit trajet optique d'un angle de 90°, moyennant quoi l'axe optique de l'oculaire (2) devient parallèle à l'axe de la lentille primaire (8) et on voit à travers ledit oculaire une image droite non inversée de l'objet; et des moyens connecteurs (6b,4,11) portés par ledit boitier (6) au niveau de ladite extrémité de sortie de lumière pour permettre audit boîtier (6) d'être pivoté sélectivement autour de l'axe du corps de l'appareil (1).

2. Dispositif selon la revendication 1, dans lequel lesdits moyens connecteurs comprennent des moyens tubulaires (4,) ayant une extrémité montée sur ledit boîtier (6) en rotation autour de l'axe des moyens tubulaires (4) et l'autre extrémité fixée de manière détachable audit corps de l'appareil (1), ledit trajet optique passant dudit prisme pentagonal (10) audit corps d'appareil (1) à travers lesdits moyens tubulaires.

3. Dispositif selon la revendication 1 ou 2, dans lequel des moyens' de verrouillage (11) sont prévus pour verrouiller sélectivement lesdits moyens connecteurs pivotants dans une position choisie.

4. Dispositif selon la revendication 1, dans lequel ledit corps d'appareil est un corps de caméra 35 mm.

5. Dispositif selon la revendication 1, dans lequel ledit corps d'appareil est une caméra de télévision ou une caméra à bande vidéo.

6. Dispositif selon la revendication 4 ou 5, dans lequel ladite lentille primaire (8) est une lentille de format 8 ou 16 mm et lesdits moyens optiques comprennent des dispositifs à lentilles (20,30) entre lesdits prismes (9,10) afin d'agrandir l'image transmise par ladite lentille primaire (8).

## Patentansprüche

1. Schnorchel-Kamerasystem mit einem Kamerakörper (1) mit einer Licht einlassenden Öffnung darin, einer Vorrichtung zur Aufzeichnung von Bildern, die durch die Lichteinlaßöffnung übertragen werden, und einem Okular (2) mit einer Linse zur Betrachtung des zu fotografierenden Objektes (12), einem länglichen hohlen Gehäuse (6), dessen eines Ende für den Lichteintritt und dessen anderes Ende für den Lichtaustritt vorgesehen ist, wobei das Lichtaustrittsende des Gehäuses (6) lösbar mit dem Kamerakörper (1) an der Lichteinlaßöffnung befestigt ist, einer Hauptlinse (8), die lösbar mit dem Lichteintrittsende des Gehäuses befestigt ist, und einer optischen Vorrichtung (9, 20, 30, 10) zur Erzielung eines optischen Pfades von der Hauptlinse durch das Gehäuse (6) zur und durch die Lichteinlaßöffnung des Kamerakörpers, wobei die optische Vorrichtung ein 90° Prisma (9) in dem Gehäuse in der Nähe des Lichteintrittsendes aufweist, das den optischen Pfad um einen Winkel von 90° dreht, **gekennzeichnet durch** ein Penta-Prisma (10) in der Nähe des Lichtaustrittsendes, das eine erste, gegen das 90° Prisma (9) gerichtete Fläche und eine zweite, senkrecht zur ersten angeordnete, gegen die Lichteinlaßöffnung des Kamerakörpers gerichtete Fläche aufweist, und das so betätigbar ist, daß es den optischen Pfad um einen Winkel von 90° dreht, wobei die optische Achse des Okulars (2) parallel zur Achse der Hauptlinse (8) gerichtet wird und ein aufrechtes, nicht reversiertes Bild des Objekts durch das Okular betrachtet wird, und eine Verbindungsvorrichtung (6b, 4, 11), die von dem Gehäuse (6) am Lichtaustrittsende aufgenommen ist und ermöglicht, daß das Gehäuse (6) selektiv um die Achse des Kamerakörpers (1) gedreht wird.

2. Kamerasystem nach Anspruch 1, bei dem die Verbindervorrichtung eine rohrförmige Vorrichtung (4) aufweist, deren eines Ende mit dem Gehäuse (6) drehbar um die Achse der rohrförmigen Vorrichtung (4) befestigt ist, und deren anderes Ende lösbar mit dem Kamerakörper (1) befestigt ist, wobei der optische Pfad von dem Penta-Prisma (10) zum Kamerakörper (1) durch die rohrförmige Vorrichtung verläuft.

3. Kamerasystem nach Anspruch 1 oder 2, bei dem die Verriegelungsvorrichtung (11) so ausgebildet ist, daß sie die drehbare Verbindervorrichtung selektiv in einer gewünschten Position verriegelt.

4. Kamerasystem nach Anspruch 1, bei dem der Kamerakörper ein Filmaufnahmekamerakörper von 35 mm Format ist.

5. Kamerasystem nach Anspruch 1, bei dem der Kamerakörper ein Fernsehkamera- oder ein Videobandkamerakörper ist.

6. Kamerasystem nach Anspruch 4 oder 5, bei dem die Haupt-linse (8) eine Linse mit 8 mm oder 16 mm Format ist und die optische Vorrichtung eine Linsenvorrichtung (20, 30) zwischen der Prismenanordnung (9, 10) aufweist, um das durch die Hauptlinse (8) übertragene Bild zu vergrößern.

FIG. 1

FIG. 2